# EUROPEAN PATENT APPLICATION

(11) **EP 0 884 702 A2**
(43) Date of publication of application: **16.12.1998**
(21) Application number: 98109329.7
(22) Date of filing: 22.05.1998
(51) Int. Cl.: G07F 7/02

(54) **An electronic information system for the provision of a substitute canteen service for employees**

(30) Priority: 23.05.1997 IT TO970442
(71) Applicant: Tekit S.p.A., 20127 Milano (IT)
(72) Inventor: DE MONTIS, Massimo, 20127 Milano (IT)
(74) Representative: Gerbino, Angelo

(57) **Abstract**

The electronic information system for the provision of a substitute canteen service to employees comprises: a microprocessor card (10) for each employee, carrying data identifying the employee, data relating to the periods of time during which the employee can benefit from the provision of the service and the value, in monetary terms, of the service to which the employee is entitled on each occasion when it is provided, and a checking device (12) which can be located at the premises of each commercial business providing the service and can read the data carried on the card (10) and compare it with a predetermined standard model for the use of the service, and which can emit a signal permitting the use of the service only when the data read on the card (10) corresponds to that provided for by the standard model.

## Description

The present invention relates to a system for the provision of a substitute canteen service to employees.

The regulations on the subject of employer-employee relations in force, for example, in Italy, in fact require employers to provide employees with a canteen service.

This service may be provided by the employer directly, or indirectly with the use of external businesses such as bars, restaurants, cafeterias and inter-company canteens, or by the provision of a substitute service performed by commercial businesses in general which are in possession of the required licences to supply gastronomic products.

In the latter case, the means which gives entitlement to make use of the substitute canteen service is a paper voucher which is usually referred to as a meal voucher or simply a ticket.

The provision of this service by companies and its use by those entitled to do so has to conform to some basic conditions which can be taken from the enabling acts and from taxation and social security regulations. Amongst these in particular, it seems useful to record that:
- the provision of a canteen, and consequently of a substitute canteen service, is strictly correlated to the production requirements of the company and relates to all those entitled, without distinction;
- the provision of a canteen, and consequently of a substitute canteen service, should not permit reimbursement in money or in goods, or any other kind of reimbursement when those having entitlement do not make use of it.

It follows from these two essential features that, in order to be considered a substitute canteen service and hence to benefit from the favourable taxation and social-security treatment provided for, the service must conform to the following requirements:
I) it must be used solely on days on which the entitled person performs work; it cannot therefore be used on days on which, for any reason, the entitled person does not work (rest days, holidays, illness, ...).
II) the commercial business at which the entitled person can make use of the substitute service must be compatible, in terms of distance, with the company or with the place where he performs his productive activity, on the basis of the working hours adopted;
III) a substitute canteen service which has not been used for any reason cannot be reused in a subsequent period and the right to make use of it should be understood as forfeited absolutely; it is therefore not permitted to accumulate unused meals, either as goods of any nature, or as equivalent monetary value.

Clearly, failure to conform to the requirements set out above puts the providing company, the entitled user, and the commercial business actually providing the food and drink outside the scope of the more favourable taxation and social-security area provided for a substitute canteen service and a situation of tax and contribution evasion can therefore be anticipated for the three above-mentioned entities.

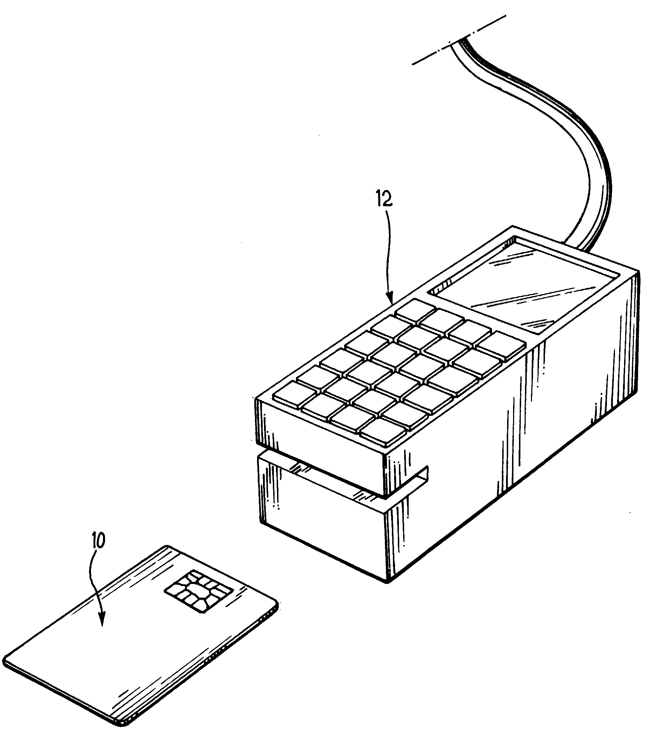

Currently, in spite of binding indications on the subjects both of labour law and of taxation and social-security treatment, firms which offer companies a substitute canteen service by means of a meal voucher or ticket perform their own service solely by means of : (a) the actual supply of a paper voucher and (b) the drawing-up of a generalized series of agreements with commercial businesses. Amongst other things, these agreements provide no bilateral indication or link between the employer and the individual commercial business.

This market configuration means that the service offered and sold by companies issuing meal vouchers or tickets has a serious loophole in terms of the satisfaction and protection of client companies when it permits, appearing powerless to prevent, improper use of the meal voucher.

Beyond mere informative messages contained in the paper documentation which quote the legal, taxation and social-security provisions in force, these companies cannot prevent improper use of the meal voucher or ticket, although such use is very widespread and puts the employer in a situation of taxation and social-security non-compliance.

In order to prevent the above-mentioned problems, the subject of the present invention is an electronic information system for the provision of a substitute canteen service to employees, comprising:
- a microprocessor card for each employee, carrying data identifying the employee, data relating to the periods of time during which the employee can benefit from the provision of the service, and the value, in monetary terms, of the service to which the employee is entitled on each occasion when it is provided, and
- a checking device which can be located at the premises of each commercial business providing the service and can read the data carried on the card and compare it with a predetermined standard model for the use of the service, and which can emit a signal permitting the use of the service only when the data read on the card corresponds to that provided for by the standard model.

The use of the system of the invention prevents the abuses mentioned above which were permitted by systems of the prior art. In fact, once the days and the time band within these days during which the canteen substitute service can legitimately be used by the employee have been established and the corresponding data has been recorded on the respective card, it will no longer be possible for the holder of the card to obtain the provision of a service from an agreed business at times (for example, on holidays) or in a manner (for example, by receiving, on a single occasion, a value equivalent to the supply of the service on several separate occasions) other than those provided for.

The system of the invention therefore offers the advantage of ensuring that the taxation and social security regulations in force are observed by the various entities (the employer, the employee holding the card, and the commercial business providing the service) involved in its operation.

According to a preferred characteristic of the system of the invention, the above-mentioned card also carries data relating to the commercial businesses permitted to provide the service to the employee holding the card.
It is thus possible to set spatial limitations as well as time limitations on the provision of the substitute canteen service, for example, enabling exclusive agreements to be entered into between a certain employer and commercial businesses selected on the basis of the satisfaction of certain requirements.

The setting of spatial limitations also permits a further check that the service is actually provided correctly. In fact, it is clear that, within the limited period provided by a normal meal break, the employee holding the card will be able to benefit from the service only in certain commercial businesses located within a predetermined radius of his workplace.

Further advantages and characteristics of the present invention will become clear from the following detailed description, given with reference to the appended drawings, provided purely by way of non-limiting example, in which:
the sole drawing shows schematically the principal components of the system according to the invention.

An electronic information system for the provision of a substitute canteen service to employees comprises a microprocessor card 10 for each employee entitled to the provision of the service and a checking device 12 which can be located at the premises of each agreed commercial business supplying the service.

The card 10 carries data identifying the employee, data relating to the periods of time during which the employee can benefit from the provision of the service, and the value, in monetary terms, of the service to which the worker is entitled on each occasion when it is provided. The card 10 may also carry data relating to the commercial businesses permitted to provide the service to the employee holding the card.

The checking device 12 is in the form of a portable unit which can be connected to an information-technology data-transmission network. It can read the data carried on the card 10 and compare it with a predetermined standard model for the use of the service. It can also emit a signal permitting the use of the service only when the data read on the card corresponds to the provisions of the standard model.

For example, if the model provides for the employee to be able to use the substitute canteen service on weekdays from 12:30 to 13:30 for a sum of 10,000 lire, the consent signal will not be emitted if it is attempted to make use of the service on bank holidays, during the evening, or by accumulating several sums of 10,000 lire which have not been used on previous days.

Once the checking device 12 has been set in accordance with a standard model conforming to the taxation and social security provisions in force, it therefore automatically ensures that they are complied with.

Naturally, the principle of the invention remaining the same, the details of construction and forms of embodiment may vary widely with respect to those described and illustrated purely by way of example, without thereby departing from its scope.

## Claims

1. An electronic information system for providing a substitute canteen service to employees comprising:
- a microprocessor card (10) for each employee, carrying data identifying the employee, data relating to the periods of time during which the employee can benefit from the supply of the service and the value, in monetary terms, of the service to which the employee is entitled on each occasion when it is provided, and
- a checking device (12) which can be located at the premises of each commercial business providing the service, and can read the data carried on the card (10) and compare it with a predetermined standard model for the use of the service, and which can emit a signal permitting the use of the service only when the data read on the card (10) corresponds to that provided for by the standard model.

2. A system according to Claim 1, in which the card (10) also carries data relating to the commercial businesses permitted to supply the service to the employee holding the card (10).

3. A system according to any one of the preceding claims, in which the checking device (12) is in the form of a portable unit which can be connected to an information-technology data-transmission network.
